# EUROPÄISCHE PATENTANMELDUNG

(11) **EP 2 702 922 A2**
(43) Veröffentlichungstag der Anmeldung: **05.03.2014**
(21) Anmeldenummer: 13003956.3
(22) Anmeldetag: 08.08.2013
(51) Int. Cl.: A47L 15/42, D06F 39/00, F24C 7/08

(54) **Verfahren zum Bedienen eines Haushaltsgeräts sowie Haushaltsgerät mit ergonomischer Bedienvorrichtung**

(30) Priorität: 29.08.2012 DE 102012017091
(71) Anmelder: Diehl AKO Stiftung & Co. KG, 88239 Wangen (DE)
(72) Erfinder: Lyszus, Joachim, 88255 Baindt (DE); Stohr, Ralph, 88299 Leutkirch (DE); Fuhge, Bruno, 88145 Opfenbach (DE)
(74) Vertreter: Diehl Patentabteilung

(57) **Zusammenfassung**

Ein Haushaltsgerät weist eine Bedienvorrichtung (16) mit wenigstens einem Bedienelement (24) sowie eine Tür (12) zum Verschließen eines Funktionsraums des Haushaltsgerätes, an welcher wenigstens eine Griffvorrichtung (14, 22) zum Öffnen bzw. Schließen der Tür angeordnet ist, auf. Zwecks ergonomischer Bedienung ist die Bedienvorrichtung (16) zumindest teilweise in unmittelbarer Nähe zu einem Angriffsbereich der Griffvorrichtung (14, 22) angeordnet, sodass ein Benutzer beim Greifen der Griffvorrichtung zum Öffnen oder Schließen der Tür mit der gleichen Hand die Bedienvorrichtung betätigen kann. Weiter wird ein Verfahren zum Einstellen eines Bedienprogramms eines Haushaltsgeräts vorgeschlagen.

## Beschreibung

Die vorliegende Erfindung betrifft ein Verfahren zum Einstellen eines Programms eines Haushaltsgeräts gemäß Patentanspruch 1 sowie ein Haushaltsgerät, insbesondere ein Haushaltsgerät mit einer ergonomischen Bedienvorrichtung gemäß Patentanspruch 10.

Der Zweck von Haushaltsgeräten wie Geschirrspülmaschinen, Waschmaschinen, Wäschetrocknern, Backöfen, Mikrowellenöfen, Herden, Kühlschränken, Gefrierschränken und dergleichen besteht grundsätzlich in einer Behandlung (z.B. Waschen, Spülen, Trocknen, Garen, etc.) der Beladung des jeweiligen Gerätes, wobei ein möglichst optimales Prozessergebnis (z.B. saubere Wäsche, etc.), eine möglichst kurze Behandlungsdauer und ein möglichst geringer Verbrauch von Ressourcen (Wasser, Strom, Waschmittel, etc.) erzielt werden sollen. Darüber hinaus soll neben einem ansprechenden Design des Haushaltsgerätes auch eine möglichst einfache und ergonomische Bedienung des Haushaltsgerätes erreicht werden.

Die DE 10 2006 001 246 A1 beschreibt ein Bedienmodul mit Bedien- und Anzeigeelementen, welches in eine Ofentür eines Gargerätes eingesetzt ist.

Die EP 2 380 479 A1 beschreibt eine Bedieneinrichtung mit berührungsempfindlichen Bedienelementen, welche als Türgriff ausgebildet und frontseitig an der Tür eines Haushaltsgerätes angeordnet ist.

Der Erfindung liegt die Aufgabe zugrunde, ein Verfahren zum Einstellen eines Programms eines Haushaltsgeräts und ein verbessertes Haushaltsgerät mit einer ergonomischen Bedienvorrichtung vorzusehen.

Die erstgenannte Aufgabe hinsichtlich eines Verfahrens wird gelöst durch ein Verfahren zum Einstellen eines Programms eines Haushaltsgeräts mit einer Bedienvorrichtung mit wenigstens einem Bedienelement, mit den Schritten: bewirken, dass eine Liste von Auswahlmöglichkeiten eines Menübereichs in einem zentralen Eingabebereich angezeigt wird; anwählen einer Auswahlmöglichkeit im zentralen Eingabebereich; bewirken, dass die Liste der Auswahlmöglichkeiten des Menübereichs aus dem zentralen Eingabebereich entfernt wird; starten des Programms.

Die zweitgenannte Aufgabe hinsichtlich eines Haushaltsgeräts wird gelöst durch ein Haushaltsgerät mit den Merkmalen des Anspruchs 10. Besonders bevorzugte Ausgestaltungen und Weiterbildungen der Erfindung sind Gegenstand der abhängigen Ansprüche.

Das erfindungsgemäße Haushaltsgerät weist eine Bedienvorrichtung mit wenigstens einem Bedienelement, eine Tür zum Verschließen eines Funktionsraums des Haushaltsgerätes, an welcher wenigstens eine Griffvorrichtung zum Öffnen bzw. Schließen der Tür angeordnet ist und eine Steuerung zur Durchführung des Verfahrens auf. Die Bedienvorrichtung ist zumindest teilweise in unmittelbarer Nähe zu einem Angriffsbereich der Griffvorrichtung angeordnet, sodass ein Benutzer beim Greifen der Griffvorrichtung zum Öffnen oder Schließen der Tür mit der gleichen Hand die Bedienvorrichtung betätigen kann.

Bei dem erfindungsgemäßen Haushaltsgerät werden das Schließen und Bedienen bzw. das Bedienen und Öffnen des Haushaltsgerätes derart miteinander kombiniert, dass ein Benutzer mit nur einem Handgriff alle erforderlichen Bedienschritte des Verfahrens durchführen kann. Der Benutzer kann die Bedienvorrichtung mit nur einer Hand, genauer mit einem Daumen oder einem Finger der Hand bedienen, ohne diese von der Griffvorrichtung der Tür zu nehmen. Die Griffvorrichtung kann dabei gleichzeitig als räumliche Referenz für die Betätigung der Bedienvorrichtung dienen. Das derart ausgestaltete Haushaltsgerät ermöglicht somit eine besonders ergonomische und einfache Bedienung durch einen Benutzer.

Unter einer Bedienvorrichtung soll in diesem Zusammenhang jede Art von Vorrichtung verstanden werden, welche wenigstens ein Bedienelement aufweist, welches von einem Benutzer betätigt werden kann, um eine Funktion des jeweiligen Haushaltsgerätes zu steuern. Bei diesen Funktionen kann es sich je nach Haushaltsgerät um Ein/Aus, ein Waschprogramm, ein Spülprogramm, eine Waschtemperatur, eine Schleuderdrehzahl, eine Kochstufe, eine Zeitdauer, etc. handeln. Die Bedienvorrichtung weist vorzugsweise ein, zwei, drei, vier oder mehr Bedienelemente auf. Im Fall von mehreren, d.h. wenigstens zwei Bedienelementen kann es sich um gleichartige oder um unterschiedliche Bedienelemente handeln. Die Bedienelemente sind vorzugsweise in der Art einer (Druck-)Taste, eines Drehknebels, eines Schiebereglers oder dergleichen ausgebildet. Die Bedienvorrichtung ist vorzugsweise drahtlos (z.B. per Funk) oder über eine Kabelverbindung mit einer Steuerung des jeweiligen Haushaltsgerätes verbunden.

Unter einer Griffvorrichtung soll in diesem Zusammenhang jede Art von Vorrichtung verstanden werden, die an einer Gerätetür angebracht bzw. anbringbar ist und von einem Benutzer betätigt werden kann, um die Gerätetür zu öffnen oder zu schließen. Die Gerätetür erfährt beim Öffnen bzw. Schließen vorzugsweise eine Schwenkbewegung. Die Griffvorrichtung ist vorzugsweise in Form einer Griffmulde, einer länglichen Griffstange oder eines Griffhebels ausgebildet. Die Griffvorrichtung weist in einer bevorzugten Ausgestaltung zudem eine Einrichtung zum Entriegeln bzw. Verriegeln der Tür in ihrem geschlossenen Zustand auf.

Mit dem Angriffsbereich der Griffvorrichtung wird in diesem Zusammenhang ein Bereich der Griffvorrichtung bezeichnet, welchen ein Benutzer mit seiner Hand (an-)greifen kann, um die Griffvorrichtung zu betätigen. Je nach Art und Größe der Griffvorrichtung ist diese räumlich stark begrenzt und erlaubt im Wesentlichen nur eine Positionierung einer Hand eines Benutzers (z.B. bei einer Griffmulde als Griffvorrichtung) oder räumlich erweitert und erlaubt unterschiedliche Positionierungen einer Hand eines Benutzers (z.B. bei einer länglichen Griffstange als Griffvorrichtung). Im erstgenannten Fall stellt die Griffvorrichtung genau einen Angriffsbereich zur Verfügung, in dessen unmittelbarer Nähe dann erfindungsgemäß die Bedienvorrichtung angeordnet ist. Im letztgenannten Fall stellt die Griffvorrichtung einen sehr ausgeweiteten Angriffsbereich bzw. mehrere Angriffsbereiche zur Verfügung; in diesem Fall ist nur ein Teil davon als Angriffsbereich im Sinne der Erfindung zu verstehen, in dessen unmittelbarer Nähe die Bedienvorrichtung angeordnet ist. Mit anderen Worten muss der Benutzer zum Beispiel eine Griffstange in einem vorbestimmten Angriffsbereich greifen, um mit der Hand gleichzeitig auch die Bedienvorrichtung betätigen zu können. Durch die für den Benutzer deutlich erkennbare Bedienvorrichtung wird der Benutzer die Griffvorrichtung jedoch intuitiv im vorbestimmten Angriffsbereich greifen können.

In einer vorteilhaften Weiterbildung wird durch berühren, antippen oder drücken des Menübereichs bewirkt, dass die Liste von Auswahlmöglichkeiten des Menübereichs in dem zentralen Eingabebereich angezeigt wird oder aus dem zentralen Eingabebereich entfernt wird.

Durch berühren, antippen oder drücken des Menübereichs wird ein Menü geöffnet oder geschlossen, in dem eine Liste von Auswahlmöglichkeiten, wie Wasch-, Spül-, Kühl-, Koch- oder Backprogramme, zusammengestellt ist, die in dem zentralen Eingabebereich angezeigt wird.

In einer bevorzugten Alternative wird durch aufziehen des Menübereichs bewirkt, dass die Liste von Auswahlmöglichkeiten des Menübereichs in dem zentralen Eingabebereich angezeigt wird und durch zuziehen des Menübereichs wird bewirkt, dass die Liste von Auswahlmöglichkeiten des Menübereichs aus dem zentralen Eingabebereich entfernt wird.

Durch aufziehen oder zuziehen des Menübereichs, also durch eine Wischbewegung, ein Menü geöffnet oder geschlossen wird, in dem eine Liste von Auswahlmöglichkeiten, wie Wasch-, Spül-, Kühl-, Koch- oder Backprogramme, zusammengestellt ist, die in dem zentralen Eingabebereich angezeigt wird. Alternativ wird eine in einem weiteren Display angezeigte Liste von Auswahlmöglichkeiten durch aufziehen oder zuziehen in den zentralen Eingabebereich hineingeschoben bzw. aus diesem herausgeschoben.

In einer weiteren Ausführungsform wird durch berühren, antippen oder drücken die Auswahlmöglichkeit im zentralen Eingabebereich angewählt.

Vorteilhafter Weise werden nach dem Anwählen einer Auswahlmöglichkeit im zentralen Eingabebereich weitere auswählbare Optionen angezeigt.

In einer weiteren Ausgestaltung wird die angewählte Auswahlmöglichkeit optisch hervorgehoben.

In einer vorteilhaften Weiterbildung ist die Liste von Auswahlmöglichkeiten im zentralen Eingabebereich verborgen, wird auf einem Display außerhalb des zentralen Eingabebereichs angezeigt oder wird durch eine Beschriftung auf einer Gerätefront des Haushaltsgeräts außerhalb des zentralen Eingabebereichs dauerhaft dargestellt.

In einer bevorzugten Alternative wird ein Abbild der Beschriftung auf der Gerätefront in den zentralen Eingabebereich gezogen oder wird durch herausschieben aus dem zentralen Eingabebereich entfernt. Mit einer Wischbewegung wird ein Abbild der Beschriftung in den zentralen Eingabebereich gezogen oder entfernt, so dass die Beschriftung und deren Abbild sichtbar sind. Die Beschriftung kann in diesem Fall weniger auffällig als das Abbild dargestellt sein, beispielsweise durch eine gedämpfte Beleuchtung oder gedeckte Farben.

In einer weiteren Ausführungsform wird die, zu einer im zentralen Eingabebereich angewählten Auswahlmöglichkeit, korrespondierende Auswahlmöglichkeit, in der dauerhaft auf der Gerätefront dargestellten Liste der Auswahlmöglichkeiten, hervorgehoben. Eine im zentralen Eingabebereich angezeigte Auswahlmarkierung wird in die dauerhaft auf der Gerätefront dargestellte Liste der Auswahlmöglichkeiten an die entsprechende Auswahlmöglichkeit übertragen. Die übertragene Auswahlmarkierung kann beispielsweise ein optisches Signal sein.

In einer bevorzugten Ausgestaltung der Erfindung weist die Bedienvorrichtung wenigstens ein berührungsempfindliches Bedienelement, bevorzugt ein Touch Slide - Bedienelement auf. Vorzugsweise ist die Bedienvorrichtung als Touch Control oder als Touch Slide Control - Bedienvorrichtung ausgestaltet. Vorzugsweise kann die Bedienvorrichtung durch Wisch- und Antippbewegungen eines Daumens oder Fingers ähnlich einem Smartphone betätigt werden.

In einer bevorzugten Ausgestaltung der Erfindung ist die Bedienvorrichtung in die Griffvorrichtung der Tür integriert. Die Bedienvorrichtung bildet mit der Griffvorrichtung vorzugsweise eine Baueinheit.

In einer anderen bevorzugten Ausgestaltung der Erfindung ist die Bedienvorrichtung an der Tür angeordnet. Vorzugsweise ist die Bedienvorrichtung in die Tür zumindest teilweise eingesetzt oder auf die Tür aufgesetzt. Die Bedienvorrichtung kann dabei im Bereich der dem Benutzer zugewandten Türfront oder im Bereich der Stirnseite der Tür angeordnet sein.

Gegenstand der Erfindung sind auch eine Griffvorrichtung zum Öffnen bzw. Schließen einer Tür, eine Bedienvorrichtung mit wenigstens einem Bedienelement und eine Tür zum Verschließen eines Funktionsraums, welche jeweils zur Verwendung in einem oben beschriebenen Haushaltsgerät der Erfindung ausgebildet sind.

Die vorliegende Erfindung ist grundsätzlich für beliebige Haushaltsgeräte, insbesondere Haushaltsgroßgeräte einsetzbar. Zu diesen zählen in diesem Zusammenhang insbesondere Geschirrspülmaschinen, Waschmaschinen, Wäschetrockner, Backöfen, Herde, Mikrowellenöfen, Kühlschränke, Gefrierschränke, Gefriertruhen und dergleichen.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Seitenschnittansicht eines Haushaltsgerätes gemäß einem ersten Ausführungsbeispiel der vorliegenden Erfindung;
- Fig. 2: eine schematische Seitenschnittansicht eines Haushaltsgerätes gemäß einem zweiten Ausführungsbeispiel der vorliegenden Erfindung;
- Fig. 3: eine schematische Seitenschnittansicht eines Haushaltsgerätes gemäß einem dritten Ausführungsbeispiel der vorliegenden Erfindung;
- Fig. 4: verschiedene schematische Ansichten zur Veranschaulichung der Funktionsweise einer Bedienvorrichtung eines Haushaltsgerätes gemäß einem Ausführungsbeispiel der vorliegenden Erfindung; und
- Fig. 5: verschiedene schematische Ansichten zur Veranschaulichung der Funktionsweise einer Bedienvorrichtung eines Haushaltsgerätes gemäß einem weiteren Ausführungsbeispiel der vorliegenden Erfindung.

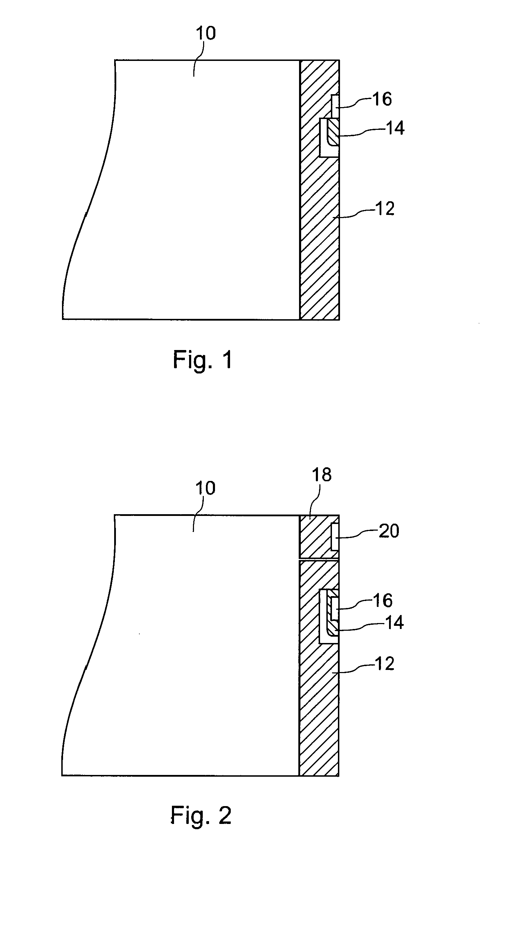

In Fig. 1 bis 3 ist jeweils beispielhaft eine Spülmaschine als ein Haushaltsgerät im Sinne der Erfindung angedeutet. Die Spülmaschine weist einen Grundkörper bzw. Korpus 10 auf, welcher einen entsprechenden Funktionsraum in seinem Inneren definiert. In dem, dem Benutzer zugewandten Frontbereich der Spülmaschine (rechts in Fig. 1 bis 3) ist eine (Geräte-)Tür zum Verschließen dieses Funktionsraums vorgesehen.

Die Tür 12 ist beispielsweise schwenkbar an dem Korpus 10 gelagert. Sie kann insbesondere zwischen einer den Funktionsraum verschließenden Stellung (jeweils dargestellt in Fig. 1 bis 3) und einer einen Zugang zum Funktionsraum ermöglichenden offenen Stellung (z.B. nach rechts unten aufgeklappt in Fig. 1 bis 3) bewegt werden.

In dem Ausführungsbeispiel von Fig. 1 erstreckt sich die Tür 12 im Wesentlichen über den gesamten Frontbereich des Grundkörpers 10. Im vertikal oberen und lateral mittigen Bereich der Tür 12 ist eine Griffmulde 14 als Griffvorrichtung in der Türfront angeordnet.

Die Griffmulde 14 ist mit einer Entriegelungsvorrichtung verbunden (nicht dargestellt), sodass die Tür 12 beim Greifen der Griffmulde 14 zum Öffnen der Tür 12 gleichzeitig entriegelt werden kann. Beim Schließen der Tür 12 erfolgt deren Verriegelung vorzugsweise automatisch, indem die Verriegelungsvorrichtung zum Beispiel in ihre Verriegelungsstellung vorgespannt ist.

Direkt oberhalb der Griffmulde 14 ist in der Türfront eine Bedienvorrichtung 16 eingesetzt. Diese Bedienvorrichtung 16 weist vorzugsweise wenigstens ein berührungsempfindliches Bedienelement auf. Beim Greifen der Griffmulde 14 kann der Benutzer aufgrund der unmittelbaren Nähe der Bedienvorrichtung 16 zum Angriffsbereich der Griffmulde 14 mit seiner Hand bzw. seinem Daumen oder Finger der Hand diese Bedienvorrichtung 16 betätigen, ohne dafür die Hand von der Griffmulde nehmen zu müssen.

Zusammen mit dem Öffnen oder Schließen der Tür kann der Benutzer somit sehr ergonomisch die Spülmaschine bedienen, d.h. zum Beispiel ein- oder ausschalten, ein Spülprogramm auswählen, eine Spültemperatur einstellen, etc.

Die Bedienvorrichtung 16 in der Tür 12 ist beispielsweise per Funk, d.h. drahtlos, mit einer Steuerung (nicht dargestellt) der Spülmaschine verbunden bzw. gekoppelt. Die Steuerung befindet sich beispielsweise im Grundkörper 10 der Spülmaschine und steuert insbesondere die Wasserzufuhr, den Wasserablauf und die Heizung der Spülmaschine.

Das in Fig. 2 gezeigte Ausführungsbeispiel unterscheidet sich von dem obigen Ausführungsbeispiel darin, dass die Bedienvorrichtung 16 nicht in der Tür 16, sondern direkt in der Griffmulde 14 positioniert ist. Die Bedienvorrichtung 16 befindet sich damit in unmittelbarer Nähe des Angriffsbereichs der Bedienvorrichtung, sodass hier ebenfalls eine ergonomische Bedienung der Spülmaschine möglich ist.

Ferner ist bei dem Ausführungsbeispiel von Fig. 2 an der dem Benutzer zugewandten Front der Spülmaschine oberhalb der Tür 12 zusätzlich eine Blende 18 vorgesehen. D.h. die Tür 12 erstreckt ich in diesem Ausführungsbeispiel nicht über die gesamte Gerätefront.

Diese Blende 18 kann als einfache Sichtblende ausgebildet sein oder zumindest teilweise als Bedienblende ausgebildet sein. Im Fall einer Bedienblende 18 ist in dieser eine Anzeige- und/oder Bedieneinheit 20 integriert, welche dem Benutzer weitere Informationen über den Betriebszustand, das eingestellte Spülprogramm, etc. darstellt bzw. - in Ergänzung zur Bedienvorrichtung 16 in der Griffmulde 14-weitere Eingabemöglichkeiten zur Verfügung stellt.

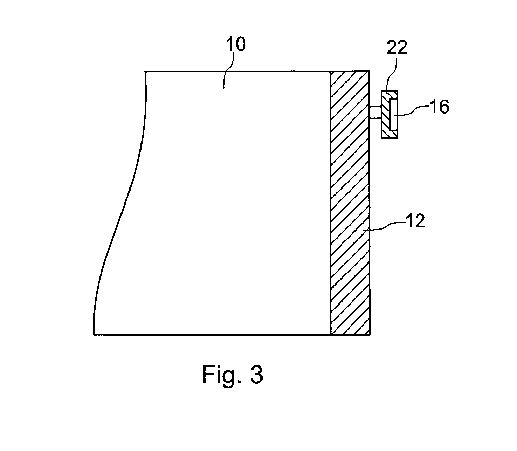

Eine derartige Blende 18 kann auch im Fall der Ausführungsbeispiele von Fig. 1 und 3 vorgesehen sein, auch wenn dies nicht separat dargestellt ist.

Das Ausführungsbeispiel von Fig. 3 unterscheidet sich von den obigen Ausführungsbeispielen insbesondere durch die Art der Griffvorrichtung. In diesem Fall ist die Griffvorrichtung als eine längliche Griffstange 22 ausgebildet, welche im vertikal oberen Bereich der Tür 12 an dieser angebracht ist und sich in Breitenrichtung der Tür 12 (Richtung senkrecht zur Zeichnungsebene) über einen Großteil, beispielsweise etwa 50% bis etwa 85%, der Tür 12 erstreckt.

Da der Angriffsbereich der Griffvorrichtung für den Benutzer im Fall der Griffstange 22 etwas von der Tür 12 beabstandet ist, ist die Bedienvorrichtung 16 in diesem Ausführungsbeispiel in die Griffstange integriert. Der Bereich, in dem die Bedienvorrichtung 16 in der Griffstange 22 eingebaut ist, bildet den Angriffsbereich der Griffstange 22 im Sinne der Erfindung. Alternativ kann die Bedienvorrichtung aber auch hier in/an der Tür 12 in unmittelbarer Nähe der Griffstange 22 angeordnet sein.

Bei der Spülmaschine nach einem dieser Ausführungsbeispiele kann der Benutzer mit nur einem Handgriff alle erforderlichen Bedienschritte durchführen, wobei seine Hand an der jeweiligen Griffvorrichtung verweilen kann. Eine Bedienung der Spülmaschine kann dabei zum Beispiel wie folgt aussehen:
- Schließen der Tür 12 mit der Hand an der Griffmulde 14 bzw. der Griffstange 22;
- Verweilen der Hand des Benutzers an der Griffmulde 14 bzw. der Griffstange 22;
- Anwählen des gewünschten Spülprogramms mit dem Daumen an der Bedienvorrichtung 16;
- Auswählen einer gewünschten Option zum angewählten Spülprogramm mit dem Daumen an der Bedienvorrichtung 16;
- Starten des Spülprogramms mit dem Daumen an der Bedienvorrichtung 16; und
- Loslassen der Griffmulde 14 bzw. der Griffstange 22.

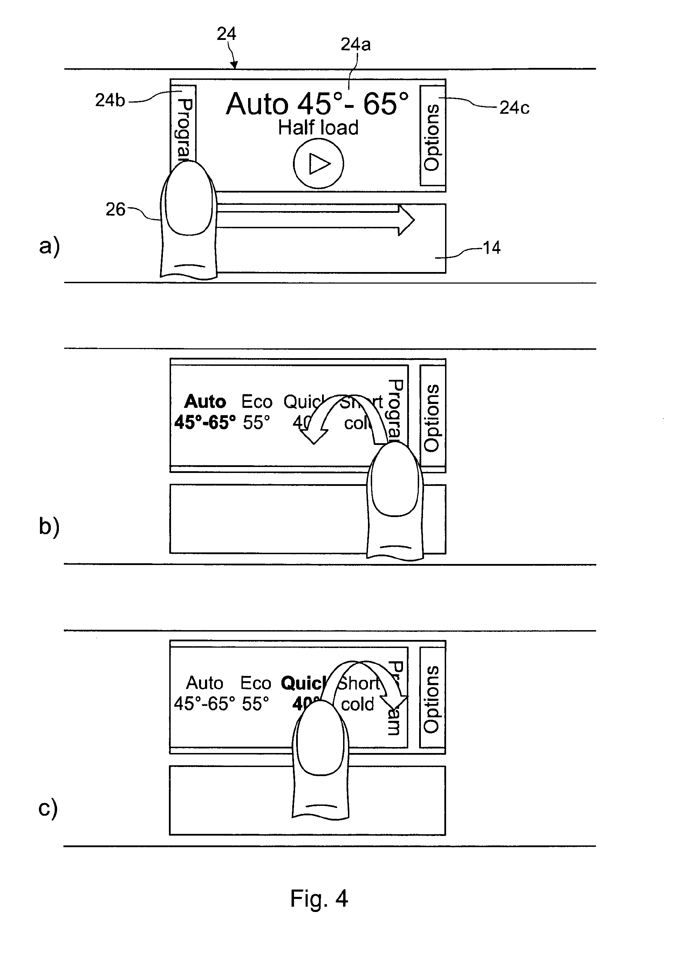

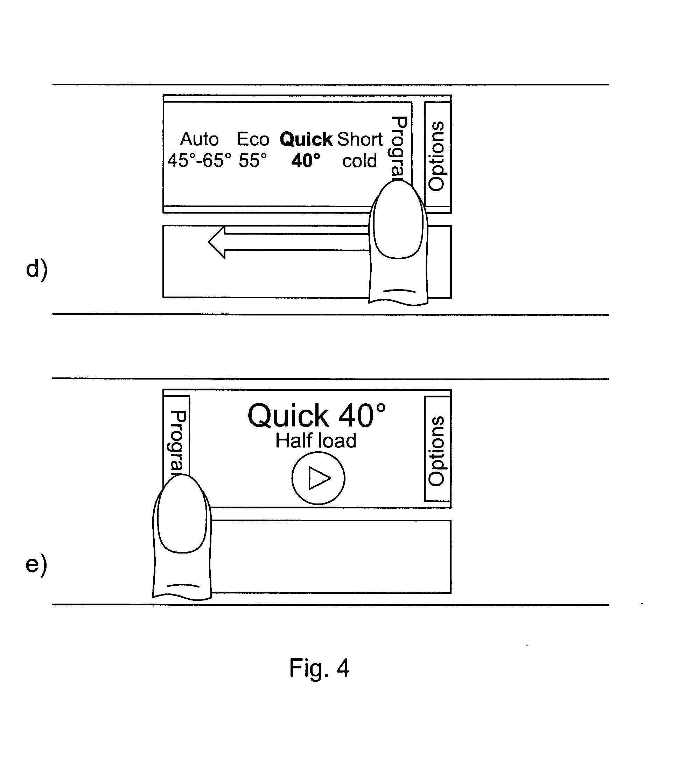

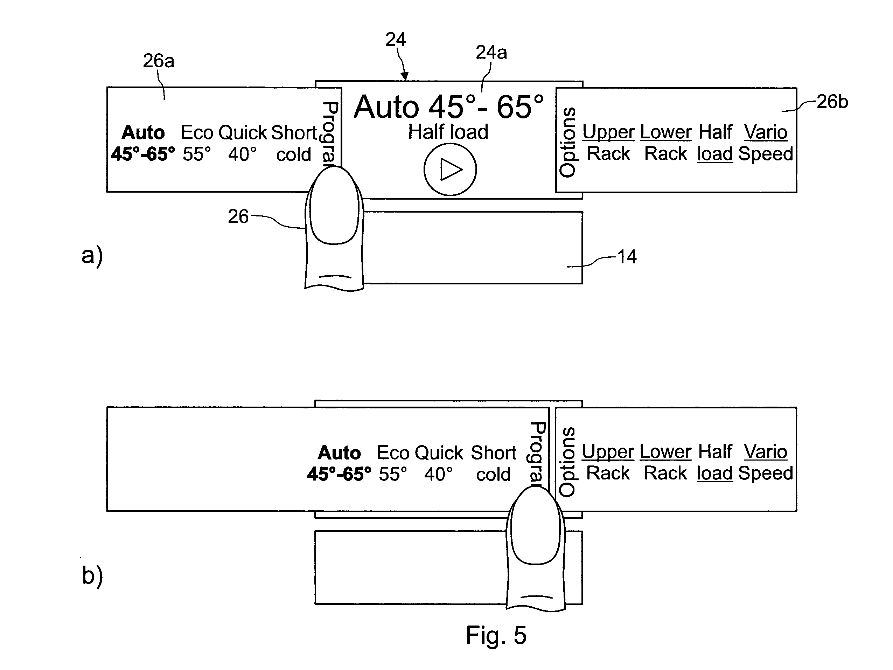

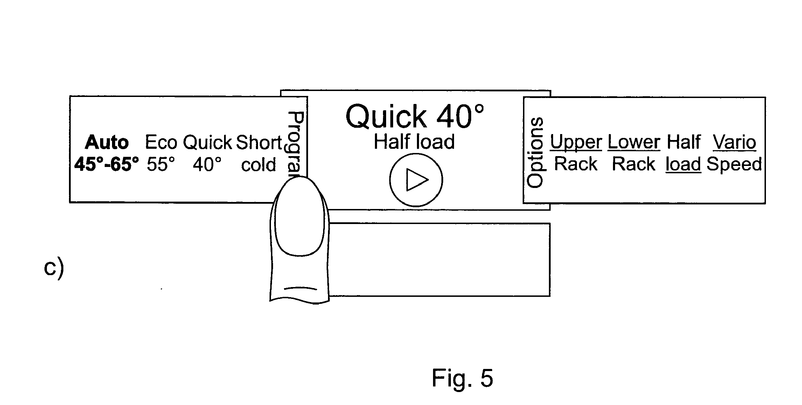

Anhand der Fig. 4 und 5 sollen nun Aufbau und Funktionsweise einer Bedienvorrichtung 16, wie sie in den oben beschriebenen Spülmaschinen eingesetzt werden kann, näher erläutert werden.

In dem Ausführungsbeispiel von Fig. 4 weist die unmittelbar oberhalb der Griffmulde 14 angeordnete Bedienvorrichtung 16 ein Touch Slide - Bedienelement 24 als berührungsempfindliches Bedienelement auf. Dieses Touch Slide - Bedienelement 24 enthält einen zentralen Eingabebereich 24a, der durch kurzes Antippen oder Drücken betätigt werden kann, und zwei Menübereiche 24b und 24c zu beiden Seiten des Eingabebereiches 24a, die aufgezogen werden können. Der Eingabebereich 24a dient gleichzeitig als Anzeigebereich. Insgesamt ist die Bedienvorrichtung 16 ähnlich wie ein Smartphone zu bedienen.

Die Betätigung der Bedienvorrichtung 16 kann beispielsweise mit dem Daumen 26 der Hand des Benutzers im Angriffsbereich der Griffmulde 14 erfolgen.

Im Ausgangszustand (Fig. 4a) werden dem Benutzer im zentralen Eingabe- und Anzeigebereich 24a des Bedienelements 24 der Bedienvorrichtung 16 das aktuell eingestellte Spülprogramm und die aktuell eingestellten Optionen angezeigt. Entsprechen diese Angaben bereits dem Wunsch des Benutzers für den nächsten Spülvorgang, so kann dieser das Spülprogramm einfach durch Antippen des Eingabebereichs (Symbol "Play") starten.

Andernfalls können Spülprogramm und Optionen vom Benutzer wie folgt geändert werden.

In einem ersten Schritt (Fig. 4b) zieht der Benutzer das Menü "Programs" 24b nach rechts auf, sodass alle zur Verfügung stehenden Spülprogramme im zentralen Eingabe- und Anzeigebereich 24a sichtbar sind. Nach dem Auswählen des gewünschten Spülprogramms (hier: "Quick 40°) durch Antippen des entsprechenden Menüpunktes in Fig. 4c zieht der Benutzer das Menü "Programs" 24b mit seinem Daumen 26 wieder nach links zu (Fig. 4d). Nun wird dem Benutzer im zentralen Eingabe- und Anzeigebereich 24a des Bedienelements 24 das eingestellte Spülprogramm "Quick 40°" mit der aktuell eingestellten oder voreingestellten Option "Half load" angezeigt (Fig. 4e).

Der Benutzer kann nun dieses Spülprogram "Quick 40°, Half load" durch Antippen des Eingabereichs 24a mit dem Daumen 26 starten oder die Optionen anhand des Menüs "Options" 24c in ähnlicher Weise wie das Spülgramm verändern.

In dem Ausführungsbeispiel von Fig. 5 hat die Bedienvorrichtung 16 im Vergleich zum Ausführungsbeispiel von Fig. 4 ein breiteres Erscheinungsbild.

Im Ausgangszustand von Fig. 5a sind seitlich neben dem zentralen Eingabe- und Anzeigebereich 24a des Touch Slide - Bedienelements 24 zwei Anzeigebereiche 26a und 26b vorgesehen, welche dem Benutzer sämtliche Menüpunkte der Menüs "Programs" und "Options" anzeigen.

Zum Einstellen eines gewünschten Spülprogramms zieht der Benutzer auch in diesem Fall mit seinem Daumen 26 das Menü "Programs" nach links in den zentralen Eingabebereich 24a auf (Fig. 5b), um das gewünschte Spülprogramm durch kurzes Antippen des entsprechenden Menüpunktes auszuwählen. Anschließend wird das Menü "Programs" wieder nach links zur Seite geschoben (Fig. 5c) und es kann nun in ähnlicher Weise eine gewünschte Option eingestellt oder direkt das Spülprogramm gestartet werden.

Die eigentliche Eingabe erfolgt auch in diesem Beispiel nur im zentralen Eingabe- und Anzeigebereich 24a. D.h. nur dieser zentrale Bereich der Bedienvorrichtung 16 muss als berührungsempfindliches Bedienelement 24, hier als Touch Slide - Bedienelement ausgeführt sein.

In einem weiteren, nicht gezeigten Ausführungsbeispiel können die vollständigen Menüs 26a, 26b auch als einfacher Aufdruck ausgeführt sein (anstatt eines Displays wie in Fig. 5). Eine andere dauerhafte Beschriftung könnte beispielsweise durch Durchbrechungen oder Vertiefungen in einer Gerätefront bzw. einer Bedienblende gebildet sein, die darüber hinaus beleuchtbar sein können. Auch eine Kombination aus Aufdruck mit zugeordneter optischer Anzeige ist möglich. Zum Ändern der Einstellungen können diese Menüs wie oben in Fig. 5 beschrieben in den zentralen Eingabe- und Anzeigebereich 24a gezogen werden.

Die Bedienvorrichtung 16 kann anstelle des oben anhand der Fig. 4 und 5 erläuterten Touch Slide - Bedienelemente 24 auch ein oder mehrere Touch - Bedienelemente aufweisen, die durch einfaches Antippen oder Drücken betätigt werden können. Beispielsweise enthält die Bedienvorrichtung 16 eine den zur Verfügung stehenden Spülprogrammen entsprechende Anzahl von berührungsempfindlichen Touch - Bedienelementen.

Ferner können die berührungsempfindlichen Bedienelemente der Bedienvorrichtung als einfache (Druck-)Tasten oder auch als Drehknebel, Schieberegler, Doppeltasten und dergleichen ausgestaltet sein.

## Patentansprüche

1. Verfahren zum Einstellen eines Programms eines Haushaltsgeräts mit einer Bedienvorrichtung (16) mit wenigstens einem Bedienelement (24), mit den Schritten
a) bewirken, dass eine Liste von Auswahlmöglichkeiten eines Menübereichs (24b, 24c, 26a, 26b) in einem zentralen Eingabebereich (24a) angezeigt wird;
b) anwählen einer Auswahlmöglichkeit im zentralen Eingabebereich (24a);
c) bewirken, dass die Liste der Auswahlmöglichkeiten des Menübereichs (24b, 24c, 26a, 26b) aus dem zentralen Eingabebereich (24a) entfernt wird;
d) starten des Programms.

2. Verfahren nach Anspruch 1,
**dadurch gekennzeichnet, dass**
durch berühren, antippen oder drücken des Menübereichs (24b, 24c, 26a, 26b) bewirkt wird, dass die Liste von Auswahlmöglichkeiten des Menübereichs (24b, 24c, 26a, 26b) in dem zentralen Eingabebereich (24a) angezeigt wird oder aus dem zentralen Eingabebereich (24a) entfernt wird.

3. Verfahren nach Anspruch 1,
**dadurch gekennzeichnet, dass**
durch aufziehen des Menübereichs (24b, 24c, 26a, 26b) bewirkt wird, dass die Liste von Auswahlmöglichkeiten des Menübereichs (24b, 24c, 26a, 26b) in dem zentralen Eingabebereich (24a) angezeigt wird und durch zuziehen des Menübereichs (24b, 24c, 26a, 26b) bewirkt wird, dass die Liste von Auswahlmöglichkeiten des Menübereichs (24b, 24c, 26a, 26b) aus dem zentralen Eingabebereich (24a) entfernt wird.

4. Verfahren nach einem der vorhergehenden Ansprüche,
**dadurch gekennzeichnet, dass**
durch berühren, antippen oder drücken die Auswahlmöglichkeit im zentralen Eingabebereich (24a) angewählt wird.

5. Verfahren nach einem der vorhergehenden Ansprüche,
**dadurch gekennzeichnet, dass**
nach dem Anwählen einer Auswahlmöglichkeit im zentralen Eingabebereich (24a) weitere auswählbare Optionen angezeigt werden.

6. Verfahren nach einem der vorhergehenden Ansprüche,
**dadurch gekennzeichnet, dass**
die angewählte Auswahlmöglichkeit optisch hervorgehoben wird.

7. Verfahren nach einem der vorhergehenden Ansprüche,
**dadurch gekennzeichnet, dass**
die Liste von Auswahlmöglichkeiten im zentralen Eingabebereich (24a) verborgen ist, auf einem Display (26a, 26b) außerhalb des zentralen Eingabebereichs (24a) angezeigt wird oder durch eine Beschriftung auf einer Gerätefront des Haushaltsgeräts außerhalb des zentralen Eingabebereichs (24a) dauerhaft dargestellt wird.

8. Verfahren nach Anspruch 7,
**dadurch gekennzeichnet, dass**
ein Abbild der Beschriftung auf der Gerätefront in den zentralen Eingabebereich (24a) gezogen wird oder durch herausschieben aus dem zentralen Eingabebereich (24a) entfernt wird.

9. Verfahren nach Anspruch 7 oder 8,
**dadurch gekennzeichnet, dass**
die, zu einer im zentralen Eingabebereich (24a) angewählten Auswahlmöglichkeit, korrespondierende Auswahlmöglichkeit, in der dauerhaft auf der Gerätefront dargestellten Liste der Auswahlmöglichkeiten, hervorgehoben wird.

10. Haushaltsgerät, mit einer Bedienvorrichtung (16) mit wenigstens einem Bedienelement (24), einer Tür (12) zum Verschließen eines Funktionsraums des Haushaltsgerätes, an welcher wenigstens eine Griffvorrichtung (14, 22) zum Öffnen bzw. Schließen der Tür angeordnet ist, und mit einer Steuerung zur Durchführung des Verfahrens nach einem der Ansprüche 1 bis 9, wobei die Bedienvorrichtung (16) zumindest teilweise in unmittelbarer Nähe zu einem Angriffsbereich einer Griffvorrichtung (14, 22) zum Öffnen bzw. Schließen einer Tür (12) angeordnet ist, wobei die Tür (12) zum Verschließen eines Funktionsraums des Haushaltsgerätes vorgesehen ist, sodass ein Benutzer beim Greifen der Griffvorrichtung zum Öffnen oder Schließen der Tür mit der gleichen Hand die Bedienvorrichtung betätigen kann.

11. Haushaltsgerät nach Anspruch 10,
**dadurch gekennzeichnet, dass**
die Bedienvorrichtung (16) wenigstens ein berührungsempfindliches Bedienelement (24) aufweist.

12. Haushaltsgerät nach einem der Ansprüche 10 oder 11,
**dadurch gekennzeichnet, dass**
die Bedienvorrichtung (16) wenigstens ein Touch Slide - Bedienelement (24) aufweist.

13. Haushaltsgerät nach einem der Ansprüche 10 bis 12,
**dadurch gekennzeichnet, dass**
die Bedienvorrichtung (16) in die Griffvorrichtung (14, 22) der Tür (12) integriert ist.

14. Haushaltsgerät nach einem der Ansprüche 10 bis 13,
**dadurch gekennzeichnet, dass**
die Bedienvorrichtung (16) an der Tür (12) angeordnet ist.

15. Griffvorrichtung (14, 22) zum Öffnen bzw. Schließen einer Tür (12) eines Haushaltsgeräts nach einem der Ansprüche 10 bis 14.

16. Bedienvorrichtung (16) mit wenigstens einem Bedienelement (24) für ein Haushaltsgerät nach einem der Ansprüche 10 bis 14.

17. Tür (12) zum Verschließen eines Funktionsraums eines Haushaltsgerätes nach einem der Ansprüche 10 bis 14.
